# EUROPÄISCHE PATENTSCHRIFT

(11) **EP 3 419 483 B1**
(45) Veröffentlichungstag und Bekanntmachung des Hinweises auf die Patenterteilung: **29.01.2020**
(21) Anmeldenummer: 17702522.8
(22) Anmeldetag: 01.02.2017
(51) Int. Cl.: A47J 31/44, A47J 31/36, A47J 31/42, A47J 31/54

(54) **VORRICHTUNG UND VERFAHREN ZUR ZUBEREITUNG EINES KAFFEEGETRÄNKS**
APPARATUS AND METHOD FOR PREPARING A COFFEE BEVERAGE
DISPOSITIF ET PROCÉDÉ DE PRÉPARATION D'UNE BOISSON AU CAFÉ

(30) Priorität: 25.02.2016 DE 102016002150
(43) Veröffentlichungstag der Anmeldung: 02.01.2019
(73) Patentinhaber: Spengler GmbH & Co. KG, 76646 Bruchsal (DE)
(72) Erfinder: RALF, Heuberger, 76857 Albersweiler (DE)
(74) Vertreter: Kesselhut, Wolf
(86) Internationale Anmeldenummer: PCT/EP2017/000122
(87) Internationale Veröffentlichungsnummer: WO 2017/144154

(56) Entgegenhaltungen:
- EP-A1- 0 559 620
- EP-A1- 2 534 985
- EP-A1- 2 832 269
- EP-A2- 2 135 533

## Beschreibung

Die Erfindung betrifft eine Vorrichtung zur Zubereitung eines Kaffeegetränks sowie ein Verfahren zu Zubereitung eines Kaffeegetränks unter Einsatz einer solchen Vorrichtung gemäß dem Oberbegriff von Anspruch 1 und 4.

Bei den heutzutage im öffentlichen Bereich eingesetzten Heißgetränkeautomaten, mit denen insbesondere Kaffee, Espresso und sonstiges koffeinhaltige Heißgetränke bereitgestellt werden, werden bekanntermaßen Brüheinheiten eingesetzt, die eine Brühkammer besitzen, in die getrocknetes Kaffeepulver eingefüllt wird, und in der ein verschiebbarer Kolben angeordnet ist, der das Pulver nach dem Verschließen der Kammer mittels eines Deckels verdichtet. Im Anschluss daran wird das verdichtete Pulver mit Heißwasser beaufschlagt, um die darin enthaltenen Aromastoffe zu lösen und diese als Heißgetränk über eine entsprechende Ausgabeeinheit in einen Becker einzuleiten.

In diesem Zusammenhang ist es aus der DE 198 55 271 C1 bekannt, den in der Brühkammer aufgenommen Kolben durch einen Spindelantrieb zu verfahren, der einen einfachen, durch einen elektronische Steuerungseinrichtung aktivierbaren Elektromotor umfasst, dessen Drehwinkelposition beim Verfahren des Kolbens nicht erfasst wird. Hierbei ergibt sich die Größe des vom Kolben während des Brühvorgangs auf das Kaffeepulver ausgeübten Drucks rein zufällig dadurch, dass der Elektromotor von der Steuerungseinrichtung für eine fest eingestellte Zeitdauer mit elektrischem Strom versorgt wird, um diesen aus der Befüllposition in die Brühposition zu verfahren. Da der Verfahrweg und damit die Endposition des Kolbens in diesem Fall entscheidend von der Menge an eingefülltem Kaffeepulver, dem Mahlgrad sowie auch den Reibungskräften im Getriebe abhängt, über welches der Kolben vom Motor angetrieben wird, unterliegt der vom Kolben während des Brühvorgangs auf das Kaffeepulver ausgeübte Druck starken Schwankungen. Wie die Anmelderin gefunden hat, hat der während des Brühvorgangs vom Kolben auf das Kaffeepulver ausgeübte Druck jedoch einen sehr großen Einfluss auf die Geschmacksqualität des Kaffeegetränks, was unter anderem darauf zurück zu führen ist, dass durch einen höheren Druck vermehrt Bitterstoffe aus dem Kaffeepulver austreten, die den Geschmack bei einer vorgegebenen Kaffesorte, Brühart, Kaffeemenge sowie auch einem vorgegebenen Mahlgrad in vorteilhafter Weise erheblich voller erscheinen lassen, wenn der vom Kolben erzeugte Druck einen vorgegebenen idealen Wert annimmt. Überschreitete der Wert des vom Kolben während des Brühvorgangs auf das Kaffeepulver ausgeübten Drucks hingegen einen bestimmten, von den zuvor erwähnten Parametern abhängigen Schwellenwert nur geringfügig, so treten die Bitterstoffe in verstärktem Maße aus dem Kaffeepulver aus und beeinträchtigen die Geschmacksqualität in nachteiliger Weise derart, dass das Getränk nahezu ungenießbar wird.

Demgemäß ist es eine Aufgabe der vorliegenden Erfindung, eine Vorrichtung und ein Verfahren zur Zubereitung eines Kaffeegetränks zu schaffen, mit denen sich die Geschmacksqualität eines Kaffeegetränks, welches in einer Brühkammer unter Einsatz eines auf das eingefüllte Kaffeepulver wirkenden Kolbens gebrüht wird, weiter verbessern lässt.

Diese Aufgabe wird erfindungsgemäß durch die Merkmale von Anspruch 1 und 4 gelöst.

Weitere Merkmale der Erfindung sind in den Unteransprüchen beschrieben.

Die Erfindung wird nachfolgend mit Bezug auf die Zeichnungen anhand einer bevorzugten Ausführungsform beschrieben. In den Zeichnungen zeigen:
- Fig. 1: eine schematische Darstellung der erfindungsgemäßen Vorrichtung, bei der der Kolben der Brüheinheit in die Auswurfposition bewegt wurde,
- Fig. 2: die Vorrichtung von Fig. 1, nachdem der Kolben in die Befüllposition bewegt wurde,
- Fig. 3: die Vorrichtung von Fig. 1, nach dem Verschließen des Deckels,
- Fig. 4: die Vorrichtung von Fig. 1, bei der der Kolben unter Kompression des Kaffeepulvers aus der Befüllposition in die Brühposition verfahren wurde,
- Fig. 5: die Vorrichtung von Fig. 1 während des Brühvorgangs, und
- Fig. 6: die Vorrichtung von Fig. 1 nach dem Öffnen des Deckels und Verfahren des Kolbens in die Auswurfposition.

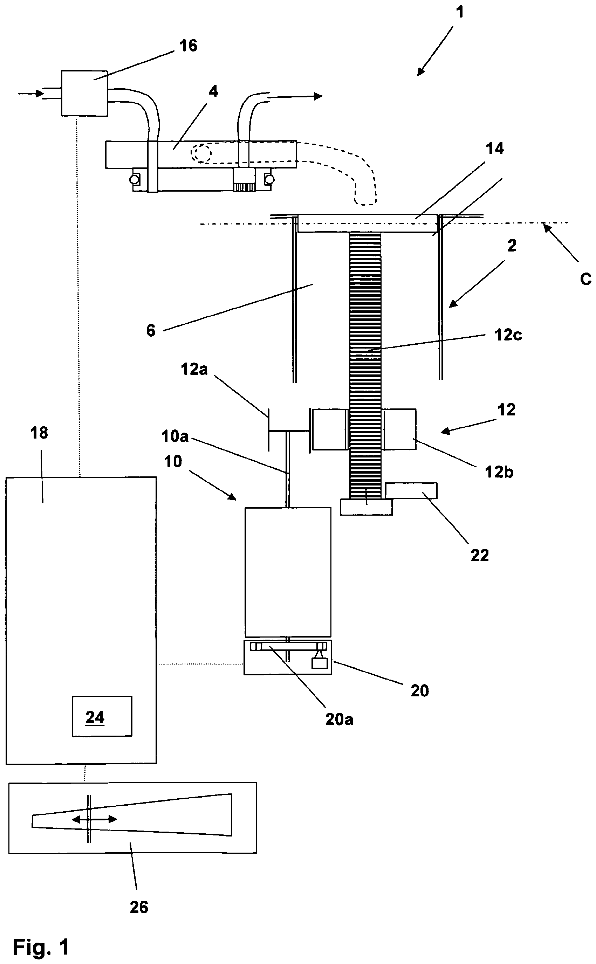

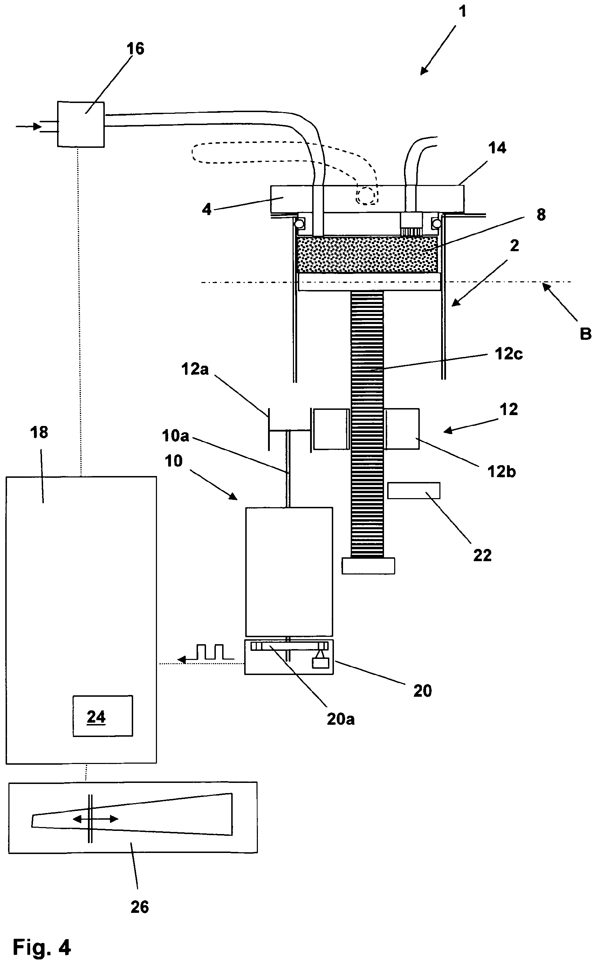

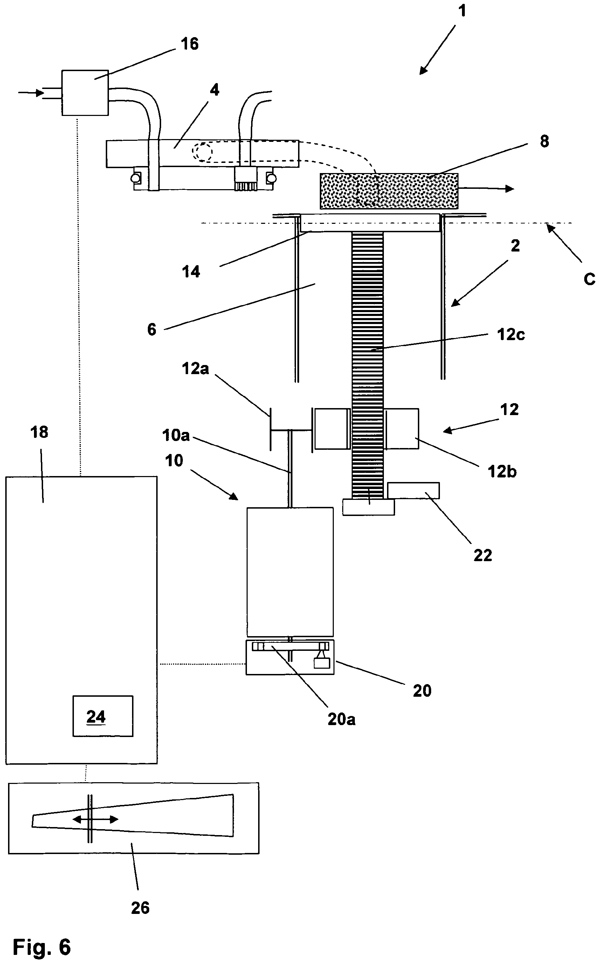

Wie in Fig. 1-6 gezeigt ist, umfasst die erfindungsgemäße Vorrichtung 1 zur Zubereitung eines Kaffeegetränks eine Brüheinheit 2, die eine Brühkammer 6 besitzt, welche durch einen Deckel 4 verschließbar ist, welcher beispielsweise durch die schematisch in gestrichelten Linien angedeuteten Kurvenbahnen und seitlich am Deckel angeordnete, in den Kurvenbahnen geführte Zapfen durch einen nicht näher gezeigten Stellantrieb Verfahren werden kann, um die Brühkammer 6 zu öffnen oder zu verschließen.

In der Brühkammer 6 ist ein Kolben 14 durch einen elektrischen Stellantrieb 10 über ein mechanisches Getriebe 12 auf- und ab verfahrbar, um in die Brühkammer 6 eingefülltes Kaffeepulver 8 zu komprimieren, bevor dieses während des Brühvorgang von erhitztem, durch eine elektrische Pumpe 16 in die Brühkammer 6 eingeleitetem Wasser durchströmt wird, welches anschließend als Kaffeegetränk aus einem nicht näher bezeichneten Auslass der Brühkammer 6 austritt. Das Verfahren des Kolbens 14 wird dabei durch eine elektronische Steuerungseinrichtung 18 gesteuert, welche mit dem Stellantrieb 10 zum Antrieb des Kolbens 14 verbunden ist, und welche darüber hinaus vorzugsweise auch die übrigen Komponenten, wie beispielsweise die Pumpe 16 zum Fördern des erhitzten Wassers in die Brühkammer 6, sowie auch den nicht näher gezeigten Boiler, bzw. das Mahlwerk etc. steuert.

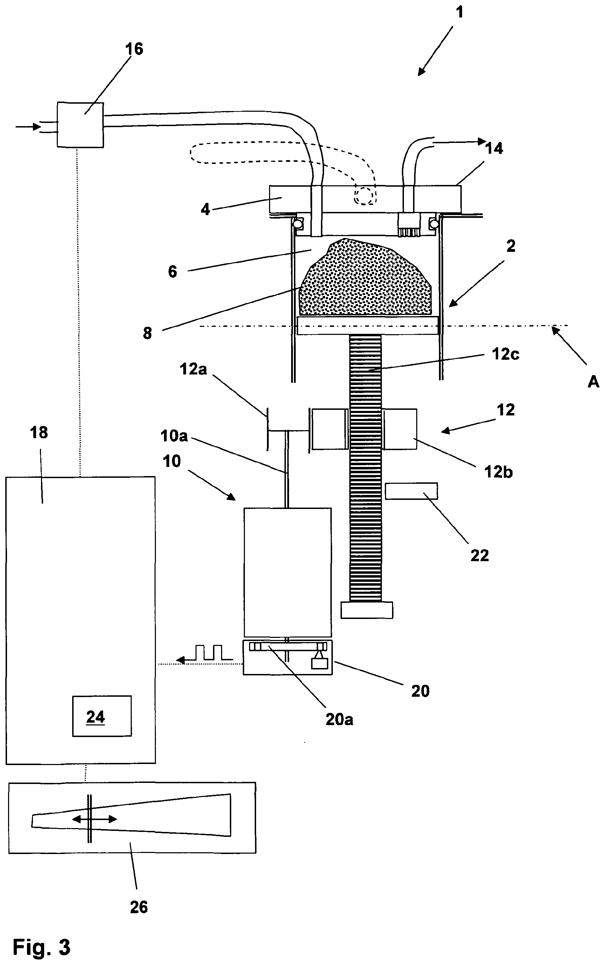

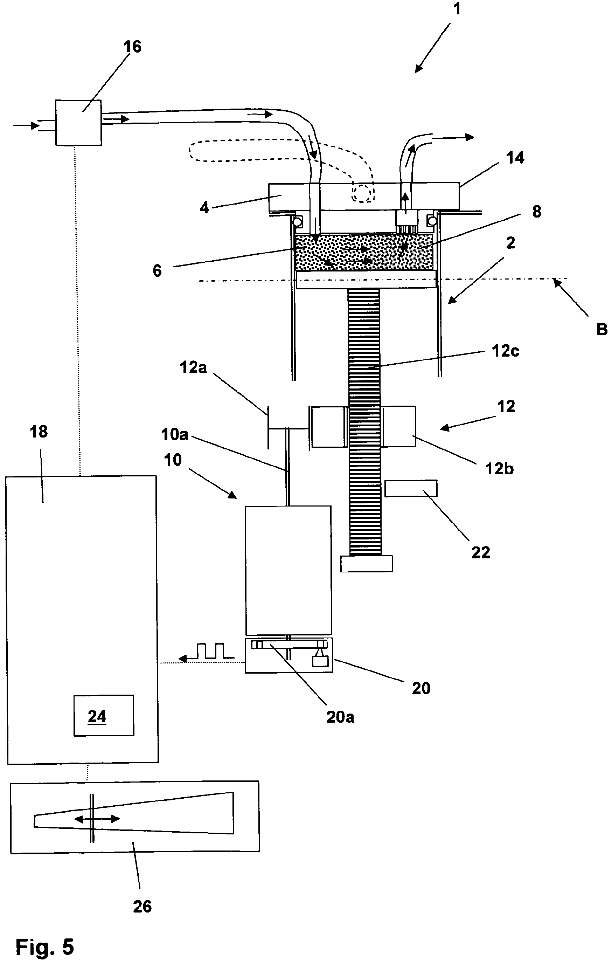

Die elektronische Steuerungseinrichtung 18 steuert den elektrischen Stellantrieb 10 hierzu in Abhängigkeit von den Signalen eines diesem zugeordneten Drehwinkelgebers 20 in der Weise, dass der Kolben 14 aus einer Einfüllposition A (Fig. 3) für das Kaffeepulver 8 unter Kompression des Kaffeepulvers 8 in eine Brühposition B (Fig. 5) und von dieser aus in eine Auswurfposition C (Fig. 7) für den durch den Brühvorgang in der Brühkammer 6 geformten Kaffee-Pressling bewegt wird. Die erfindungsgemäße Vorrichtung zeichnet sich dadurch aus, dass die elektronische Steuerungseinrichtung 18 den Kolben 14 zum Kalibrieren des Drehwinkelgebers 20 zunächst gegen einen Anschlag 22 in der Auswurfposition C verfährt (Fig. 1). Aus dieser Auswurfposition C wird der Kolben 14 im Anschluss daran um eine vorgegebene Wegstrecke in Abwärtsrichtung in die Einfüllposition A bewegt, deren Länge einer in einem elektronischen Speicher 24 der elektronischen Steuerungseinrichtung 18 abgelegten ersten Anzahl von Pulsen des Drehwinkelgebers 20 entspricht. Nach einer vorgegebenen Einfüllzeit, in der das nicht näher gezeigte Mahlwerk aktiviert wird und das Kaffeepulver von oben her in die geöffnete Brühkammer 6 eingefüllt wird, verfährt die elektronische Steuerungsvorrichtung 18 den Kolben 14 nach dem Schließen des Deckels 4 um eine zweite Wegstrecke in Aufwärtsrichtung in die Brühposition B, deren Länge der Anzahl einer im Speicher 24 abgelegten zweiten Anzahl von Pulsen des Drehwinkelgebers 20 entspricht. Nachdem die elektronische Steuerungsvorrichtung 18 die entsprechende zweite Anzahl von Pulsen vom Drehwinkelgeber 20 erhalten hat, wobei in der vorliegenden Anmeldung der Begriff "Pulse" jedwede Art von pulsförmigen elektronischen Signalen umfassen soll, wie insbesondere digitalen Ein- und Aussignalen, verfährt die Steuerungseinrichtung 18 den Kolben 14 nach einer vorgegebenen Brühdauer aus der Brühposition B um eine vorgegebene dritte Wegstrecke in die Auswurfposition A zurück, in der der Pressling nach dem Öffnen des Deckels 4 durch einen nicht näher gezeigten Auswurfmechanismus vom Kolben 14 entfernt wird.

Durch die Erfindung ergibt sich der Vorteil, dass das Kalibrieren des Drehwinkelgebers 20 in einem Zustand erfolgt, bei dem der Deckel geöffnet ist und keine Drucklast auf den Kolben 14 wirkt. Hierdurch lassen sich die Fehler beim Kalibrationsvorgang, die durch auftretende Reibungskräfte herbeigeführt werden, so gering wie möglich halten, was wiederum dazu führt, dass der Stellfehler beim Verfahren des Kolbens 14 in die Brühposition B unter Kompression des Kaffeepulvers 8 ebenfalls reduziert wird, und der Kolben mit einer deutlich höheren Genauigkeit in die Brühposition verfahren werden kann. Diese erhöhte Genauigkeit beim Verfahren des Kolbens 14 in die Brühposition unter Kompression des Kaffeepulvers eröffnet hierbei die Möglichkeit, den Druck, den der Kolben während des Brühvorgang auf das Kaffeepulver ausübt, mit einer extrem hohen Genauigkeit reproduzierbar einzustellen.

Aufgrund der Ableitung des Stellweges des Kolbens 14 beim Verfahren in die Brühposition B aus den Pulsen des zuvor kalibrierten Drehwinkelgebers 20 allein ergibt sich hierbei gegenüber einer reinen zeitgesteuerten Positionierung oder einer über den aufgenommenen Motorstrom des elektrischen Stellantriebs 10 erfolgenden Positionierung der Vorteil, dass die erreichte Endposition für den Brühvorgang nahezu unabhängig von den auftretenden Reibungskräften ist.

Gegenüber einer ebenfalls denkbaren Messung der Druckkraft des Kolbens auf das Kaffeepulver 8 durch einen Drucksensor, beispielsweise einen piezoelektrischen Drucksensor, besitzt die erfindungsgemäße Lösung den Vorteil, dass die ermittelte Druckkraft nicht von der Temperatur abhängt, die im Bereich des in diesem Falle zwischen dem Kolben und dem Antriebselement wirkenden Sensors herrscht, sondern allein von der Anzahl der vom Drehwinkelgeber 20 erzeugten und der Steuerungsvorrichtung 18 zugeführten Pulse. Da die Anzahl der Pulse, die vom Drehwinkelgeber erzeugt werden, nicht von der Temperatur beeinflusst wird, die im Bereich der Brühkammer 6 und auch unterhalb des Kolbens 14 zwischen dem Befüllen der Brühkammer und dem Brühvorgang infolge des eingeleiteten Heißwassers doch beachtlich variieren kann, unterliegt der vom Kolben 14 auf das Kaffeepulver 8 ausgeübte Druck während des Brühvorgang nahezu keinen Temperatureinflüssen.

Bei der bevorzugten Ausführungsform der erfindungsgemäßen Vorrichtung 1 ist der elektrische Stellantrieb 10 ein Gleichstrom-Elektromotor, der über ein an seiner Antriebswelle 10a befestigtes Zahnrad 12a einen Spindelantrieb 12b für eine Gewindespindel 12c antreibt, mit der der Kolben 14 gekoppelt ist. Der Drehwinkelgeber 20 umfasst dabei eine mit der Antriebswelle 10a des Elektromotors drehfest gekoppelte Lochscheibe oder Schlitzscheibe, die - wie in den Figuren 1 bis 6 angedeutet - vorzugsweise auf dem dem Zahnrad 12a gegenüberliegenden Ende der Antriebswelle 10a angeordnet ist.

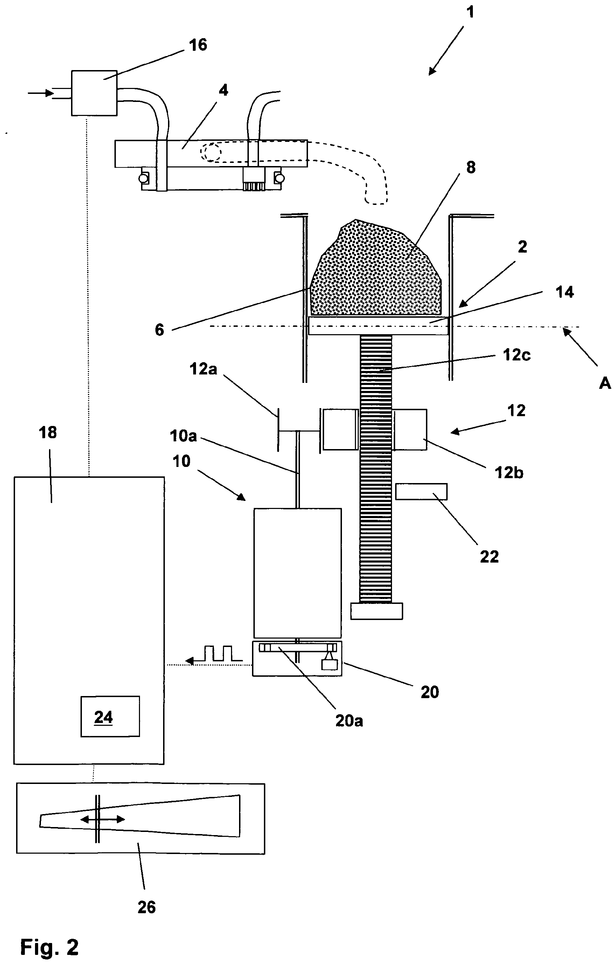

Bei der bevorzugten Ausführungsform der Erfindung kann der Drehwinkelgeber 20 beim Verfahren des Kolbens aus der in Fig. 1 gezeigten Initialisierungsposition, bzw. Auswurfposition A um den maximalen Verfahren Weg in die in Fig. 2 gezeigte Befüllposition beispielsweise 680 Pulse erzeugen. Hierbei entspricht ein Verfahren Weg von 1 m des Kolbens 14 beispielsweise 15 Pulsen. Es versteht sich, dass die Anzahl der Pulse pro Millimeter Verfahrweg durch eine entsprechende Untersetzung des Getriebes 12, bzw. des Spindelantriebs auch anders gewählt werden kann.

Nach einem weiteren der Erfindung zu Grunde liegenden Gedanken weist die erfindungsgemäße Vorrichtung 1 mit der elektronischen Steuerungseinrichtung 18 verbundene Eingabemittel 26 auf, insbesondere einen ersten elektrischen Schalter, der bevorzugt als ein berührungsempfindlicher Schalter oder ein berührungsempfindliches Sensorfeld ausgestaltet ist, durch dessen Betätigung sich der Wert für die Anzahl der der zweiten Wegstrecke zugeordneten Pulse im Speicher 24 schrittweise erhöhen oder verringern lässt, um den Druck, welchen der Kolben 14 in der Brühposition B auf das Kaffeepulver 8 ausübt, zu erhöhen oder zu erniedrigen.

Die Funktionsweise der erfindungsgemäßen Vorrichtung 1 wird nachfolgend anhand des Verfahrens zur Zubereitung eines Kaffeegetränks, bei dem die zuvor beschriebene Vorrichtung 1 zum Einsatz kommt, näher erläutert.

Hierbei zeichnet sich das erfindungsgemäße Verfahren durch die folgenden Verfahrensschritte aus:
a) Eingabe einer gewünschten Kaffeeart, Kaffeestärke und eines der Kaffeeart zugeordneten Geschmacks-Parameters, und
b) Erhöhen oder Erniedrigen eines im Speicher 24 abgespeicherten Werts für die zweite Anzahl der Pulse, die vom Drehwinkelgeber 20 beim Verfahren des Kolbens 14 um die zweite Wegstrecke aus der Einfüllposition A in die Brühposition B erzeugt wird in Abhängigkeit von dem eingegebenen Geschmacks-Parameter,
c) Einfüllen einer der Kaffeeart und Kaffeestärke zugeordneten Menge an Kaffeepulver 8 in die Brühkammer 6,
d) Verfahren des Deckels 4 in die Schließstellung,
e) Verfahren des Kolbens 14 aus der Einfüllposition A unter Kompression des Kaffeepulvers um die zweite Wegstrecke in Richtung der Auswurfposition C, bis der Drehwinkelgeber 14 die in Abhängigkeit vom Geschmacks-Parameter erhöhte oder erniedrigte zweite Anzahl von Pulsen erzeugt hat,
f) Aktivieren der Pumpe 16 für eine vorgegebene Zeitdauer zur Einleitung einer vorgegebenen Menge an Heißwasser in die Brühkammer 6 und Deaktivieren der Pumpe,
g) Öffnen des Deckels 4 und Verfahren des Kolbens 14 in die Auswurfposition A, sowie
h) Entfernen des Kaffee-Presslings vom Kolben.

Bei dem zuvor beschriebenen Verfahren ist es von besonderem Vorteil, wenn der Kolben 14 nach dem Deaktivieren der Pumpe 16 zum Nachpressen des Kaffee-Presslings aus der Brühposition B um eine vierte Wegstrecke in Richtung der Auswurfposition C in eine nicht näher gezeigte Nachpress-Position verfahren wird, bis der Drehwinkelgeber 14 eine der vierten Wegstrecke entsprechende, im Speicher 24 abgelegte Anzahl von Pulsen erzeugt hat. Durch das Nachpressen des zuvor mit Heißwasser beaufschlagen Kaffeepulver 8 ergibt sich der Vorteil, dass ein trockener Kaffeepulver-Pressling entsteht, der in der Auswurfposition A problemlos durch einen Schieber oder dergleichen, welcher auch am Deckel 4 befestigt sein kann, vom Kolben 14 heruntergeschoben werden kann, ohne dass wässrige Rückstände auf den Kolben verbleiben, die bei einem sich anschließenden Brühvorgang den Geschmack des Kaffeegetränks nachteilig beeinflussen.

Weiterhin kann es von Vorteil sein, wenn bei dem erfindungsgemäßen Verfahren nach dem Deaktivieren der Pumpe 16 und vor dem Öffnen des Deckels 4 ein in der Wasserzuleitung zur Brühkammer 6 angeordnetes, in den Darstellungen nicht näher gezeigte Ventil geöffnet wird, um den in der Brühkammer 6 während des Brühvorgangs erzeugten Brühdruck vor dem Öffnen des Deckels 4 aus der Brühkammer 6 abzuleiten.

Nach einem weiteren der Erfindung zu Grunde liegenden Gedanken kann der im Speicher 24 abgespeicherte Wert für die zweite Anzahl von Pulsen zusätzlich in Abhängigkeit von der eingegebenen und im Speicher 24 abgespeicherten Kaffestärke erhöht oder erniedrigt werden, derart, dass bei einer Erhöhung der Menge an in die Brühkammer 6 eingefülltem Kaffeepulver 8 die zweite Anzahl der Pulse verringert und die zweite Wegstrecke entsprechend verkürzt wird. Hierdurch wird dem Umstand Rechnung getragen, dass es zu keiner Erhöhung des vom Kolben 14 auf das Kaffeepulver 8 ausgeübten Drucks aufgrund des vergrößerten Kaffeevolumens in der Brühposition B kommt, die zu einem Austreten von zusätzlichen Bitterstoffen führen würde, sondern dass die Stellung des Kolbens 14 in der Brühposition entsprechend korrigiert wird, um trotz des vergrößerten Volumens an Kaffeepulver 8 den ursprünglichen voreingestellten Druckwert, bzw. den über die Eingabemittel 26 korrigierten Druckwert, zu erhalten.

Nach einer weiteren vorteilhaften Ausführungsform des erfindungsgemäßen Verfahrens kann der im Speicher 24 abgespeicherte Wert für die zweite Anzahl von Pulsen zusätzlich in Abhängigkeit von einem im Speicher 24 abgespeicherten Wert für die Kaffeesorte erhöht oder erniedrigt werden, derart, dass bei einem stärker gerösteten Kaffee die zweite Anzahl der Pulse verringert und die zweite Wegstrecke entsprechend verkürzt wird. Hierdurch ergibt sich der Vorteil, dass für unterschiedlich starke geröstete Kaffeesorten eine entsprechende Korrektur des Druckwerts vorgenommen werden kann, durch die die Qualität des während des Brühvorgang erzeugten Kaffeegetränks individuell an die Vorlieben des jeweiligen Benutzers angepasst werden kann.

In diesem Zusammenhang kann es weiterhin vorgesehen sein, dass der im Speicher 24 abgespeicherte Wert für die zweite Anzahl von Pulsen zusammen mit einem individuellen Benutzerindex als fester Wert im Speicher 24 der elektronischen Steuerungseinrichtung 18 abspeicherbar ist. Hierbei ist es von besonderem Vorteil, wenn zusätzliche Eingabemittel 26 vorgesehen sind, über welche der abgespeicherte Wert durch Eingabe des individuellen Benutzerindex für einen nächsten Brühvorgang abrufbar ist, um den Kolben 14 aus der Einfüllposition A um die zweite Wegstrecke in die Brühposition B zu verfahren, bis der Drehwinkelgeber 20 die aus dem Speicher 24 gerufene zweite Anzahl von Pulsen erzeugt hat.

Ferner ist es zur Verkürzung der Ausgabezeit des Kaffeegetränks von Vorteil, wenn das Verfahren des Kolbens 14 aus der Auswurfposition C in die Einfüllposition A und/oder aus der Einfüllposition A in eine zwischen der Brühposition B und der Einfüllposition A liegende Zwischenposition mit einer Geschwindigkeit erfolgt, die höher ist als die Geschwindigkeit, mit der der Kolben 14 aus der Zwischenposition in die Brühposition verfahren wird.

Schließlich kann es gemäß eines weiteren der Erfindung zugrunde liegenden Gedankens vorgesehen sein, dass die zeitliche Änderung der vom Drehwinkelgeber 20 beim Verfahren des Kolbens 14 um die zweite Wegstrecke aus der Einfüllposition A in die Brühposition B erzeugten Pulse von der elektronischen Steuerungseinrichtung 18 erfasst und mit einem vorgegebenen, insbesondere zuvor im Speicher 24 abgelegten Schwellenwert verglichen wird, und dass die elektronische Steuerungseinrichtung 18 beim Unterschreiten des Schwellenwertes ein Warnsignal erzeugt, welches den Bediener auf ein Fehlen von Kaffee im Kaffee-Voratsbehälter hinweist. Durch die Überwachung der zeitlichen Änderung der vom Drehwinkelgeber 20 beim Verfahren des Kolbens 14 um die zweite Wegstrecke erzeugten Pulse, die zur Drehrate des Antriebsmotors proportional sind, eröffnet sich die Möglichkeit, das Fehlen von Kaffeebohnen, bzw. bei einfachen Vorrichtungen ohne Mahlwerk von Kaffeepulver im Vorratsbehälter, auf einfachste Weise ohne einen zusätzlichen Füllstandssensor im Kaffee-Vorratsbehälter zu erfassen. Dies darauf zurück zu führen, dass im Falle einer zu geringen oder gar fehlenden Menge an in der Einfüllposition A in die Brühkammer eingefülltem Kaffeepulver beim Verfahren des Kolbens 14 in die Brühposition B kein kompressionsbedingter Gegendruck vom Kaffeepulver erzeugt wird, welcher bei einer ordnungsgemäßen Füllmenge dazu führt, dass die vom Drehzahlgeber 20 erfasste Drehrate abnimmt und unter den Schwellenwert fällt. Anders ausgedrückt wird das Fehlen der Abnahme der Drehrate von der elektronischen Steuerungsvorrichtung durch einen Vergleich der Drehrate mit einem vorgegebenen Sollwert oder Schwellenwert ermittelt und in diesem Falle ein Warnsignal erzeugt, welches den Benutzer auf ein Fehlen von Kaffeebohnen, bzw. Kaffeepulver im Vorratsbehälter hinweist.

### Bezugszeichenliste

- 1: Vorrichtung
- 2: Brüheinheit
- 4: Deckel
- 6: Brühkammer
- 8: Kaffeepulver
- 10: elektrischer Stellantrieb
- 10a: Antriebswelle
- 12: mechanisches Getriebe
- 12a: Zahnrad auf Antriebswelle
- 12b: Spindelantrieb
- 12c: Gewindespindel
- 14: Kolben
- 16: Pumpe
- 18: elektronische Steuerungseinrichtung
- 20: Drehwinkelgeber
- 22: Anschlag
- 24: elektronischer Speicher
- 26: Eingabemittel
- A: Einfüllposition des Kolbens
- B: Brühposition des Kolbens
- C: Auswurfposition des Kolbens

## Patentansprüche

1. Vorrichtung (1) zur Zubereitung eines Kaffeegetränks, umfassend eine Brüheinheit (2) mit einer durch einen Deckel (4) verschließbaren Brühkammer (6), in welcher Kaffeepulver (8) nach dem Einfüllen durch einen von einem elektrischen Stellantrieb (10) über ein mechanisches Getriebe (12) angetriebenen Kolben (14) komprimiert, und das komprimierte Kaffeepulver von erhitztem, durch eine elektrische Pumpe (16) in die Brühkammer (6) eingeleitetem Wasser durchströmt wird, welches aus einem Auslass der Brühkammer (6) austritt, sowie mit einer elektronischen Steuerungseinrichtung (18), welche den elektrischen Stellantrieb (10) in Abhängigkeit von den Signalen eines diesem zugeordneten Drehwinkelgebers (20) in der Weise steuert, dass der Kolben (14) aus einer Einfüllposition (A) für das Kaffeepulver unter Kompression des Kaffeepulvers (8) in eine Brühposition (B) und von dieser aus in eine Auswurfposition (C) für den durch den Brühvorgang in der Brühkammer (6) geformten Kaffee-Pressling bewegt wird,
**dadurch gekennzeichnet, dass**
die elektronische Steuerungseinrichtung (18) den Kolben (14) zum Kalibrieren des Drehwinkelgebers (20) zunächst gegen einen Anschlag (22) in der Auswurfposition (C) verfährt, im Anschluss daran den Kolben (14) von dieser Auswurfposition (C) aus um eine vorgegebene Wegstrecke in Abwärtsrichtung in die Einfüllposition (A) bewegt, deren Länge einer in einem elektronischen Speicher (24) der elektronischen Steuerungseinrichtung (18) abgelegten ersten Anzahl von Pulsen des Drehwinkelgebers (20) entspricht, dass die elektronische Steuerungsvorrichtung (18) den Kolben (14) nach einer vorgegebenen Einfüllzeit um eine zweite Wegstrecke in Aufwärtsrichtung in die Brühposition (B) verfährt, deren Länge der Anzahl einer im Speicher (24) abgelegten zweiten Anzahl von Pulsen des Drehwinkelgebers (20) entspricht, und dass die elektronische Steuerungseinrichtung (18) den Kolben (14) nach einer vorgegebenen Brühdauer aus der Brühposition (B) um eine vorgegebene dritte Wegstrecke in die Auswurfposition (A) zurück verfährt, in der der Pressling nach dem Öffnen des Deckels (4) durch einen Auswurfmechanismus vom Kolben (14) entfernt wird.

2. Vorrichtung nach Anspruch 1,
**dadurch gekennzeichnet, dass**
der elektrische Stellantrieb (10) ein Gleichstrom-Elektromotor ist, der über ein an seiner Antriebswelle (10a) befestigtes Zahnrad (12a) einen Spindelantrieb (12b) für eine Gewindespindel (12c) antreibt, mit der der Kolben (14) gekoppelt ist, und dass der Drehwinkelgeber (20) eine mit der Antriebswelle (10a) des Elektromotors drehfest gekoppelte Lochscheibe oder Schlitzscheibe ist, die vorzugsweise auf dem dem Zahnrad (12a) gegenüberliegenden Ende der Antriebswelle (10a) angeordnet ist.

3. Vorrichtung nach Anspruch 1 bis 2,
**dadurch gekennzeichnet, dass**
diese mit der elektronischen Steuerungseinrichtung (18) verbundene Eingabemittel (26) aufweist, insbesondere einen ersten elektrischen Schalter, durch dessen Betätigung sich der Wert für die Anzahl der der zweiten Wegstrecke zugeordneten Pulse, im Speicher (24) schrittweise erhöhen oder verringern lässt, um den Druck, welchen der Kolben (14) in der Brühposition (B) auf das Kaffeepulver (8) ausübt, zu erhöhen oder zu erniedrigen.

4. Verfahren zur Zubereitung eines Kaffeegetränks unter Verwendung einer Vorrichtung (1) nach einem der vorhergehenden Ansprüche, mit den folgenden Verfahrensschritten,
a) Eingabe einer gewünschten Kaffeeart, Kaffeestärke und eines der Kaffeeart zugeordneten Geschmacks-Parameters, und
b) Erhöhen oder Erniedrigen eines im Speicher (24) abgespeicherten Werts für die zweite Anzahl der Pulse, die vom Drehwinkelgeber (20) beim Verfahren des Kolbens (14) um die zweite Wegstrecke aus der Einfüllposition (A) in die Brühposition (B) erzeugt wird in Abhängigkeit von dem eingegebenen Geschmacks-Parameter,
c) Einfüllen einer der Kaffeeart und Kaffeestärke zugeordneten Menge an Kaffeepulver (8) in die Brühkammer (6),
d) Verfahren des Deckels (4) in die Schließstellung,
e) Verfahren des Kolbens (14) aus der Einfüllposition (A) unter Kompression des Kaffeepulvers (8) um die zweite Wegstrecke in Richtung der Auswurfposition (C), bis der Drehwinkelgeber (14) die in Abhängigkeit vom Geschmacks-Parameter erhöhte oder erniedrigte zweite Anzahl von Pulsen erzeugt hat,
f) Aktivieren der Pumpe (16) für eine vorgegebene Zeitdauer zur Einleitung einer vorgegebenen Menge an Heißwasser in die Brühkammer (6) und Deaktivieren der Pumpe (16),
g) Öffnen des Deckels (4) und Verfahren des Kolbens (14) in die Auswurfposition (C), sowie
h) Entfernen des Kaffee-Presslings vom Kolben (14).

5. Verfahren nach Anspruch 4,
**dadurch gekennzeichnet, dass**
der Kolben (14) nach dem Deaktivieren der Pumpe (16) zum Nachpressen des Kaffee-Presslings aus der Brühposition (B) um eine vierte Wegstrecke in Richtung der Auswurfposition (C) in eine Nachpress-Position (D) verfahren wird, bis der Drehwinkelgeber (14) eine der vierten Wegstrecke entsprechende, im Speicher (24) abgelegte Anzahl von Pulsen erzeugt hat.

6. Verfahren nach Anspruch 4 oder 5,
**dadurch gekennzeichnet, dass**
nach dem Deaktivieren der Pumpe (16) und vor dem Öffnen des Deckels (4) ein in der Wasserzuleitung zur Brühkammer (6) angeordnetes Ventil geöffnet wird, um den in der Brühkammer (6) während des Brühvorgangs erzeugten Brühdruck vor dem Öffnen des Deckels (4) aus der Brühkammer (6) abzuleiten.

7. Verfahren nach einem der Ansprüche 4 bis 6,
**dadurch gekennzeichnet, dass**
der im Speicher (24) abgespeicherte Wert für die zweite Anzahl von Pulsen zusätzlich in Abhängigkeit von der eingegebenen und im Speicher (24) abgespeicherten Kaffestärke erhöht oder erniedrigt wird, derart, dass bei einer Erhöhung der Menge an in die Brühkammer (6) eingefülltem Kaffepulver (8) die zweite Anzahl der Pulse verringert und die zweite Wegstrecke entsprechend verkürzt wird.

8. Verfahren nach einem der Ansprüche 4 bis 7,
**dadurch gekennzeichnet, dass**
der im Speicher (24) abgespeicherte Wert für die zweite Anzahl von Pulsen zusätzlich in Abhängigkeit von einem im Speicher (24) abgespeicherten Wert für die Kaffesorte erhöht oder erniedrigt wird, derart, dass bei einem stärker gerösteten Kaffee die zweite Anzahl der Pulse verringert und die zweite Wegstrecke entsprechend verkürzt wird.

9. Verfahren nach einem der Ansprüche 4 bis 8,
**dadurch gekennzeichnet, dass**
der im Speicher (24) abgespeicherte Wert für die zweite Anzahl von Pulsen zusammen mit einem individuellen Benutzerindex als fester Wert im Speicher (24) der elektronischen Steuerungseinrichtung (18) abspeicherbar ist, und dass Eingabemittel (26) vorgesehen sind, über welche der abgespeicherte Wert durch Eingabe des individuellen Benutzerindex für einen nächsten Brühvorgang abrufbar ist, um den Kolben (14) aus der Einfüllposition (A) um die zweite Wegstrecke in die Brühposition (B) zu verfahren, bis der Drehwinkelgeber (20) die aus dem Speicher (24) abgerufene zweite Anzahl von Pulsen erzeugt hat.

10. Verfahren nach einem der Ansprüche 4 bis 9,
**dadurch gekennzeichnet,dass**
das Verfahren des Kolbens (14) aus der Auswurfposition (C) in die Einfüllposition (A) und/oder aus der Einfüllposition (A) in eine zwischen der Brühposition (B) und der Einfüllposition (A) liegende Zwischenposition mit einer Geschwindigkeit erfolgt, die höher ist als die Geschwindigkeit, mit der der Kolben (14) aus der Zwischenposition in die Brühposition verfahren wird.

11. Verfahren nach einem der Ansprüche 4 bis 10,
**dadurch gekennzeichnet, dass**
das die zeitliche Änderung der vom Drehwinkelgeber (20) beim Verfahren des Kolbens (14) um die zweite Wegstrecke aus der Einfüllposition (A) in die Brühposition (B) erzeugten Pulse von der elektronischen Steuerungseinrichtung (18) erfasst und mit einem vorgegebenen, insbesondere im Speicher (24) abgelegten Schwellenwert verglichen wird, und dass die elektronische Steuerungseinrichtung (18) beim Unterschreiten des Schwellenwertes ein Warnsignal erzeugt, welches den Bediener auf ein Fehlen von Kaffee im Kaffee-Voratsbehälter hinweist.

## Claims

1. A device (1) for preparing a coffee beverage, comprising a brewing unit (2) with a brewing chamber (6) which is closable by a lid (4), in which chamber coffee powder (8) after being poured in is compressed by a plunger (14) driven by an electric actuating drive (10) by way of a gear mechanism (12), and the compressed coffee powder is percolated by heated water introduced into the brewing chamber (6) by an electric pump (16), which water emerges from an outlet of the brewing chamber (6), and also with an electronic control means (18) which controls the electric actuating drive (10) dependent on the signals of a rotary encoder (20) which is associated therewith such that the plunger (14) is moved out of a filling position (A) for the coffee powder, compressing the coffee powder (8), into a brewing position (B), and is moved from there into an ejection position (C) for the coffee puck formed by the brewing operation in the brewing chamber (6),
**characterised in that**
the electronic control means (18) first moves the plunger (14) against a stop (22) in the ejection position (C) in order to calibrate the rotary encoder (20), then moves the plunger (14) from this ejection position (C) by a predetermined distance in a downwards direction into the filling position (A), the length of which distance corresponds to a first number of pulses of the rotary encoder (20) which number is stored in an electronic memory (24) of the electronic control means (18), **in that** the electronic control means (18) moves the plunger (14) after a predetermined filling time by a second distance in an upwards direction into the brewing position (B), the length of which distance corresponds to the number of a second number of pulses of the rotary encoder (20) stored in the memory (24), and **in that** the electronic control means (18) moves the plunger (14) after a predetermined brewing duration back out of the brewing position (B) by a predetermined third distance into the ejection position (A), in which after the lid (4) has been opened the puck is removed from the plunger (14) by an ejection mechanism.

2. A device according to Claim 1,
**characterised in that**
the electric actuating drive (10) is a direct-current electric motor which by way of a gear wheel (12a) fastened to its drive shaft (10a) drives a spindle drive (12b) for a threaded spindle (12c) with which the plunger (14) is coupled, and **in that** the rotary encoder (20) is a perforated disc or slotted disc coupled non-rotatably with the drive shaft (10a) of the electric motor, which disc is preferably arranged on the end of the drive shaft (10a) opposite to the gear wheel (12a).

3. A device according to Claims 1 to 2,
**characterised in that**
it has input means (26) connected to the electronic control means (18), especially a first electric switch, by the actuation of which the value for the number of the pulses which are associated with the second distance can be increased or reduced step-wise in the memory (24) in order to increase or lower the pressure which the plunger (14) applies on the coffee powder (8) in the brewing position (B).

4. A method for preparing a coffee beverage using a device (1) according to one of the preceding claims, having the following method steps:
a) inputting a desired type of coffee, coffee strength and a flavour parameter associated with the type of coffee, and
b) increasing or lowering a value stored in the memory (24) for the second number of pulses which is generated by the rotary encoder (20) upon the plunger (14) being moved by the second distance out of the filling position (A) into the brewing position (B) dependent on the input flavour parameter,
c) pouring an amount of coffee powder (8) associated with the type of coffee and coffee strength into the brewing chamber (6),
d) moving the lid (4) into the closed position,
e) moving the plunger (14) out of the filling position (A), whilst compressing the coffee powder (8), by the second distance in the direction of the ejection position (C) until the rotary encoder (14) has generated the second number of pulses which is increased or lowered dependent on the flavour parameter,
f) activating the pump (16) for a predetermined period of time in order to introduce a predetermined amount of hot water into the brewing chamber (6), and deactivating the pump (16),
g) opening the lid (4) and moving the plunger (14) into the ejection position (C), and
h) removing the coffee puck from the plunger (14).

5. A method according to Claim 4,
**characterised in that**
after the pump (16) has been deactivated, the plunger (14), in order to re-press the coffee puck, is moved out of the brewing position (B) by a fourth distance in the direction of the ejection position (C) into a re-pressing position (D) until the rotary encoder (14) has generated a number of pulses which corresponds to the fourth distance and which is stored in the memory (24).

6. A method according to Claim 4 or 5,
**characterised in that**
after the pump (16) has been deactivated and before the lid (4) is opened, a valve arranged in the water feed line to the brewing chamber (6) is opened in order to let off the brewing pressure generated in the brewing chamber (6) during the brewing operation from the brewing chamber (6) prior to opening the lid (4).

7. A method according to one of Claims 4 to 6,
**characterised in that**
the value for the second number of pulses which is stored in the memory (24) is additionally increased or lowered dependent on the input coffee strength which is stored in the memory (24), such that in the case of an increase in the amount of coffee powder (8) poured into the brewing chamber (6) the second number of the pulses is reduced and the second distance is shortened accordingly.

8. A method according to one of Claims 4 to 7,
**characterised in that**
the value for the second number of pulses which is stored in the memory (24) is additionally increased or lowered dependent on a value, stored in the memory (24), for the coffee type, such that in the case of a more heavily roasted coffee the second number of pulses is reduced and the second distance is shortened accordingly.

9. A method according to one of Claims 4 to 8,
**characterised in that**
the value for the second number of pulses which is stored in the memory (24), together with an individual user index, can be stored as a fixed value in the memory (24) of the electronic control means (18), and **in that** input means (26) are provided by way of which the stored value can be retrieved for a subsequent brewing operation by inputting the individual user index, in order to move the plunger (14) out of the filling position (A) by the second distance into the brewing position (B) until the rotary encoder (20) has generated the second number of the pulses retrieved from the memory (24).

10. A method according to one of Claims 4 to 9,
**characterised in that**
the moving of the plunger (14) out of the ejection position (C) into the filling position (A) and/or out of the filling position (A) into an intermediate position lying between the brewing position (B) and the filling position (A) takes place at a speed which is greater than the speed at which the plunger (14) is moved out of the intermediate position into the brewing position.

11. A method according to one of Claims 4 to 10,
**characterised in that**
the change over time in the pulses generated by the rotary encoder (20) upon the plunger (14) being moved by the second distance out of the filling position (A) into the brewing position (B) is detected by the electronic control means (18) and compared with a predetermined threshold value, especially one stored in the memory (24), and **in that** the electronic control means (18) upon the value dropping below the threshold value generates a warning signal which indicates to the operator that there is a lack of coffee in the coffee reservoir.

## Revendications

1. Dispositif (1), destiné à préparer une boisson au café, qui comprend une unité d'infusion (2), comportant une chambre d'infusion (6) qui peut être fermée par un couvercle (4) et dans laquelle la poudre de café (8) est comprimée, après remplissage, par un piston (14) entraîné par un actionneur électrique (10) par l'intermédiaire d'une transmission mécanique (12) et la poudre de café comprimée est traversée par de l'eau chauffée, introduite par une pompe électrique (16) dans la chambre d'infusion (6) qui s'échappe par une sortie de la chambre d'infusion (6), ainsi qu'avec un dispositif de commande électronique (18) qui commande l'actionneur électrique (10) en fonction des signaux d'un capteur d'angle de rotation (20) associé à celui-ci, de telle sorte que le piston (14) est déplacé depuis une position de remplissage (A) pour la poudre de café par compression de la poudre de café (8) dans une position d'infusion (B) et de celle-ci dans une position d'éjection (C) pour le produit pressé de café formé par l'opération d'infusion dans la chambre d'infusion (6), **caractérisé en ce que** le dispositif de commande électronique (18) déplace le piston (14) tout d'abord contre une butée (22) dans la position d'éjection (C) pour étalonner le capteur d'angle de rotation (20), puis déplace le piston (14) de cette position d'éjection (C) sur une distance prédéterminée vers le bas dans la position de remplissage (A) dont la longueur correspond à un premier nombre, enregistré dans une mémoire électronique (24) du dispositif de commande électronique (18), d'impulsions du capteur d'angle de rotation (20), **en ce que** le dispositif de commande électronique (18) déplace le piston (14), après un temps de remplissage prédéterminé, jusque dans la position d'infusion (B) vers le haut sur une deuxième distance dont la longueur correspond au nombre d'un second nombre, enregistré dans la mémoire (24), d'impulsions du capteur d'angle de rotation (20) et **en ce que** le dispositif de commande électronique (18) ramène le piston (14) après une durée d'infusion prédéterminée, à partir de la position d'infusion (B) sur une troisième distance prédéterminée, dans la position d'éjection (C), dans laquelle le produit pressé est retiré après l'ouverture du couvercle (4) par un mécanisme d'éjection du piston (14).

2. Dispositif selon la revendication 1, **caractérisé en ce que** l'actionneur électrique (10) est un moteur électrique à courant continu qui entraine par le biais d'une roue dentée (12a) fixée au niveau de son arbre d'entrainement (10a) un entrainement à broche (12b) pour une broche filetée (12c) avec laquelle est couplé le piston (14), et **en ce que** le capteur d'angle de rotation (20) est un disque perforé ou un disque à fente couplé, de façon à ne pas tourner, à l'arbre d'entrainement (10a) du moteur électrique, et placé de préférence sur l'extrémité opposée à la roue dentée (12a) de l'arbre d'entrainement (10a).

3. Dispositif selon la revendication 1 à 2, **caractérisé en ce que** celui-ci comporte des moyens d'entrée (26) reliés au dispositif de commande électronique (18), en particulier un premier commutateur électrique, dont l'actionnement permet de diminuer ou d'augmenter progressivement la valeur pour le nombre d'impulsions, associées à la deuxième distance, dans la mémoire (24), afin de diminuer ou d'augmenter la pression que le piston (14) exerce dans la position d'infusion (B) sur la poudre de café (8).

4. Procédé destiné à préparer une boisson au café, utilisant un dispositif (1) selon l'une des revendications précédentes, qui comprend les étapes de procédé suivantes :
a) introduction d'un type, d'une intensité de café souhaités et d'un paramètre gustatif associé au type de café, et,
b) augmentation ou diminution d'une valeur enregistrée dans la mémoire (24) pour le second nombre d'impulsions qui est créé par le capteur d'angle de rotation (20) lors du déplacement du piston (14) sur la deuxième distance depuis la position de remplissage (A) dans la position d'infusion (B), en fonction du paramètre gustatif entré,
c) remplissage d'une quantité, associée au type et à l'intensité du café, de poudre de café (8) dans la chambre d'infusion (6),
d) déplacement du couvercle (4) dans la position de fermeture,
e) déplacement du piston (14) depuis la position de remplissage (A), la poudre de café (8) étant comprimée, sur une deuxième distance en direction de la position d'éjection (C), jusqu'à ce que le capteur d'angle de rotation (20) a créé le second nombre, diminué ou augmenté en fonction du paramètre gustatif, d'impulsions,
f) activation de la pompe (16) pour une durée prédéterminée pour introduire une quantité prédéterminée d'eau chaude dans la chambre d'infusion (6) et désactivation de la pompe (16),
g) ouverture du couvercle (4) et déplacement du piston (14) dans la position d'éjection (C), ainsi que
h) retrait du produit pressé de café du piston (14).

5. Procédé selon la revendication 4, **caractérisé en ce que** le piston (14) est déplacé après la désactivation de la pompe (16) pour recompression du produit pressé de café, depuis la position d'infusion (B), sur une quatrième distance en direction de la position d'éjection (C) dans une position de recompression (D), jusqu'à ce que le capteur d'angle de rotation (20) a créé un nombre enregistré dans la mémoire (24), correspondant à la quatrième distance, d'impulsions.

6. Procédé selon la revendication 4 ou 5, **caractérisé en ce qu'**après la désactivation de la pompe (16) et avant l'ouverture du couvercle (4), un clapet, disposé dans l'alimentation en eau vers la chambre d'infusion (6), est ouvert pour évacuer la pression d'infusion créée dans la chambre d'infusion (6) lors de l'opération d'infusion, avant l'ouverture du couvercle (4), depuis la chambre d'infusion (6).

7. Procédé selon l'une des revendications 4 à 6, **caractérisé en ce que** la valeur enregistrée dans la mémoire (24) pour le second nombre d'impulsions est diminuée ou augmentée en outre en fonction de l'intensité du café entrée et enregistrée dans la mémoire (24), de telle sorte que, lors d'une augmentation de la quantité de poudre de café (8) remplie dans la chambre d'infusion (6), le second nombre d'impulsions est diminué et la deuxième distance est raccourcie en fonction.

8. Procédé selon l'une des revendications 4 à 7, **caractérisé en ce que** la valeur enregistrée dans la mémoire (24) pour le second nombre d'impulsions est diminuée ou augmentée en outre en fonction de la valeur enregistrée dans la mémoire (24) pour le type de café, de telle sorte qu'en présence d'un café torréfié fortement, le second nombre d'impulsions est diminué et la deuxième distance est raccourcie en fonction.

9. Procédé selon l'une des revendications 4 à 8, **caractérisé en ce que** la valeur enregistrée dans la mémoire (24) pour le second nombre d'impulsions peut être enregistrée conjointement avec un index utilisateur individuel, en tant que valeur fixe dans la mémoire (24) du dispositif de commande électronique (18), et **en ce que** sont prévus des moyens d'entrée (26) par le biais desquels la valeur enregistrée peut être consultée en entrant l'index utilisateur individuel pour une opération d'infusion ultérieure, afin de déplacer le piston (14) depuis la position de remplissage (A) sur la deuxième distance dans la position d'infusion (B) jusqu'à ce que le capteur d'angle de rotation (20) a créé le second nombre, consulté depuis la mémoire (24), d'impulsions.

10. Procédé selon l'une des revendications 4 à 9, **caractérisé en ce que** le déplacement du piston (14) est effectué depuis la position d'éjection (C) dans la position de remplissage (A) et/ou depuis la position de remplissage (A) dans une position intermédiaire située entre la position d'infusion (B) et la position de remplissage (A), à une vitesse qui est supérieure à la vitesse à laquelle le piston (14) est déplacé depuis la position intermédiaire dans la position d'infusion.

11. Procédé selon l'une des revendications 4 à 10, **caractérisé en ce que** la modification temporelle des impulsions créées par le capteur d'angle de rotation (20) lors du déplacement du piston (14) sur la deuxième distance depuis la position de remplissage (A) jusque dans la position d'infusion (B), du dispositif de commande électronique (18) est saisie et est comparée à une valeur seuil prédéterminée, enregistrée en particulier dans la mémoire (24), et **en ce que** le dispositif de commande électronique (18) génère lors de sous-dépassement de la valeur seuil, un signal d'avertissement, qui indique à l'utilisateur un manque de café dans le réservoir de stockage de café.
